**Europäisches Patentamt**

**European Patent Office**

**Office européen des brevets**

(19)

(11) Veröffentlichungsnummer : **0 334 866 B1**

(12) **EUROPÄISCHE PATENTSCHRIFT**

(45) Veröffentlichungstag der Patentschrift :
23.09.92 Patentblatt 92/39

(51) Int. Cl.$^5$ : **F16D 71/00, // H01Q3/06**

(21) Anmeldenummer : 87907763.4

(22) Anmeldetag : 02.12.87

(86) Internationale Anmeldenummer :
**PCT/EP87/00749**

(87) Internationale Veröffentlichungsnummer :
**WO 88/04376 16.06.88 Gazette 88/13**

(54) ANTRIEBS- UND VERRIEGELUNGSEINRICHTUNG.

(30) Priorität : 04.12.86 DE 3641463

(43) Veröffentlichungstag der Anmeldung :
04.10.89 Patentblatt 89/40

(45) Bekanntmachung des Hinweises auf die
Patenterteilung :
23.09.92 Patentblatt 92/39

(84) Benannte Vertragsstaaten :
DE FR IT NL

(56) Entgegenhaltungen :
FR-A- 1 578 892
US-A- 3 546 966
US-A- 4 606 443

(73) Patentinhaber : TELDIX GmbH
Grenzhöfer Weg 36 Postfach 105608
W-6900 Heidelberg 1 (DE)

(72) Erfinder : MÜLLER, Hans, Christian
Kohlackerweg 17
W-6903 Neckargemünd (DE)
Erfinder : SCHOPP, Richard
Köpfelweg 55
W-6900 Heidelberg 1 (DE)

(74) Vertreter : Wiechmann, Manfred, Dipl.-Ing.
ANT Nachrichtentechnik GmbH
Patentabteilung Gerberstrasse 33
W-7150 Backnang (DE)

**Beschreibung**

Die Erfindung betrifft eine Antriebs- und Verriegelungseinrichtung, enthaltend eine mit einem auf einem Stator befestigten Antrieb verbundene Antriebswelle, ein Getriebe und einen Rotor, der mittels der Antriebswelle und des Getriebes zwischen zwei um einen vorgegebenen Winkel zueinander verdreht liegende Endstellungen gedreht werden kann, von denen wenigstens eine verriegelbar ist.

Der Erfindung liegt die Aufgabe zugrunde, eine Antriebs- und Verriegelungseinrichtung zu schaffen, die den Rotor in der wenigstens einen Endstellung verriegelt und zwar, ohne daß nach Erreichen der Endstellung hierzu ein weiteres Antriebsglied (z. B. Motor, Magnet o. ä.) wirksam sein muß.

Diese Aufgabe wird durch die im Anspruch 1 angegebenen Merkmale gelöst.

Weitere Verbesserungen werden durch die Merkmale der Ansprüche 2 - 4 erreicht.

Das Getriebe kann ein Zahnradgetriebe sein, bei dem die Welle des beliebigen Antriebs über ein Zahnrad ein oder mehrere Zwischenzahnräder antreibt, deren Achsen auf einem zur Antriebsachse konzentrischen Kreis liegen. Das oder die Zwischenzahnräder greifen dann in eine Innenverzahnung eines mit dem Rotor verbundenen Teils ein. Die Zwischenzahnräder bzw. deren Wellen sind an dem genannten Bauteil befestigt.

Das Getriebe kann aber auch ein unter dem Namen "Harmonic-Drive" bekanntes Getriebe sein, das im Anspruch 3 angesprochen ist und anhand der Zeichnung näher erläutert wird (sh. z. B. US-A 2906 143 und DE-A 2315 746).

Anhand der Figurenbeschreibung wird ein Ausführungsbeispiel der Erfindung näher erläutert.

Es zeigen:

Figur 1 und 2 - Schnittdarstellungen entlang der Schnittlinien A-B, C-D,

Figur 3 und 4 - Ausschnitte der Figur 2 zur Funktionserklärung.

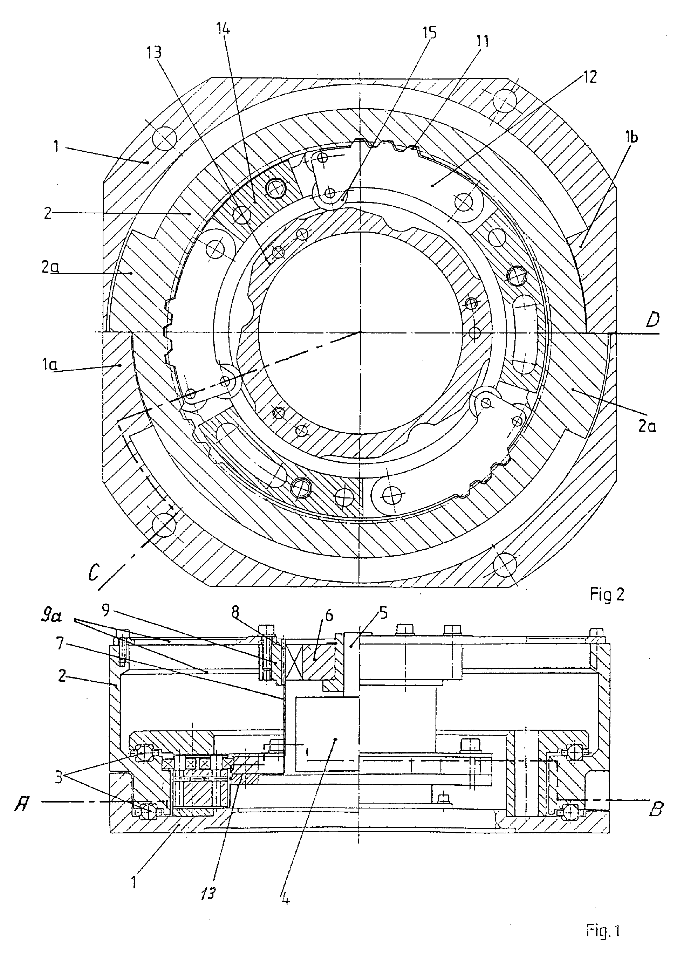

In Figur 1 ist mit 1 ein feststehendes Teil bezeichnet, an dem ein drehbares Teil 2 (Rotor) durch Lager 3 gelagert ist. Am feststehenden Teil 1 ist konzentrisch zum Rotor 2 ein Motor 4 befestigt, der über eine Antriebswelle 5 den Rotor 2 antreibt. Die Antriebswelle 5 treibt ein elliptisch ausgebildetes Teil 6, das ein flexibles Rohr 7 an radial gegenüberliegenden Stellen nach außen verformt und dadurch eine Außenverzahnung 8 des Rohres 7 mit einer Innenverzahnung eines Ringes 9 teilweise in Eingriff bringt. Die Verzahnung des Ringes 9 weist eine um eine gerade Zahl von Zähnen (z. B. 2) größere Zahl von Zähnen als das flexible Rohr 7 auf. Hierdurch erfolgt bei einem Umlauf der Welle 5 eine Verdrehung des Ringes 9 und des über Teile 9a damit verbundenen Rotors 2 um einen der Differenz der Zähne entsprechenden Winkel.

An dem feststehenden Teil 1 sind zwei Anschläge 1a und 1b vorgesehen, an die Teile 2a des Rotors 2 in den Endstellungen anliegen. Dies zeigt Figur 2, in der der Rotor 2 in der einen Endstellung gezeigt ist. Durch Zähne 11 an Hebeln 12, die in entsprechende Lücken des Rotors 2 eingreifen, ist der Rotor 2 verriegelt. Dabei sind die Zähne 11 und die Lücken derart angeordnet, daß mittels der Schrägflächen der Zähne und Lücken ein Moment auf den Rotor in Richtung auf den Anschlag 1a ausgeübt wird, wodurch der Rotor fest an den Anschlag gepreßt wird und keine Lose aufweist. In Figur 2 sind drei Verriegelungshebel 12 dargestellt, die an einem mit dem Stator verbundenen Teil 14 befestigt sind.

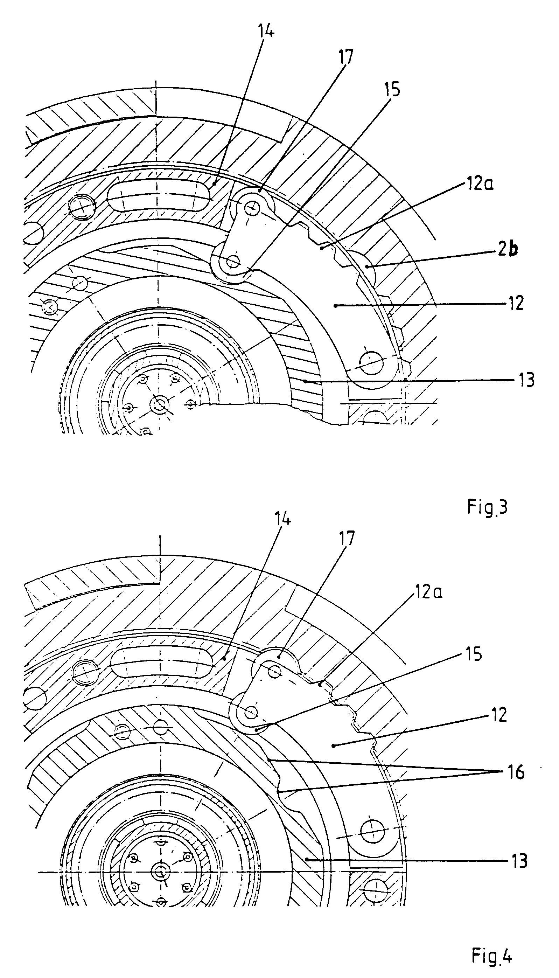

Wird die Antriebswelle 5 gedreht, so erfolgt ein Verdrehung des Rotors, bis dieser den Anschlag (z. B. 1a) erreicht hat. Während dieser Verdrehungsphase des Rotors 2 ist ein Ring 13 , der mit dem flexiblen Rohr 7 verbunden ist, durch die Hebel 12 und die daran befestigten Rollen 15 formschlüssig dadurch blockiert, daß sich die Rolle 15 in der Vertiefung des konzentrischen Ringes 13 befindet. Die Rolle 17 rollt einer am Rotor 2 konzentrisch angebrachten Laufbahn abrollt (Fig. 3). Damit wird ein Auslenken des Hebels 12 verhindert. Sobald der Anschlag erreicht ist, ist die Laufbahn des Rotors 2 durch eine Vertiefung 2b unterbrochen, so daß nun der Hebel 12 ausgelenkt werden kann. Da der Rotor 2 wegen des Anschlags nun nicht mehr weiterbewegt werden kann, dreht das Reaktionsmoment des Motorantriebs 4 das flexible Rohr 7 und den damit verbundenen nun freien konzentrischen Ring 13 in entgegengesetzte Richtung.

Dadurch werden über die Schrägflächen 16 und die Rollen 15 die Hebel 12 gegen eine hier nicht gezeigte Feder angehoben, wobei die Zähne 12a in die nunmehr gegenüberliegenden Lücken des Rotors 2 eingreifen und diesen verriegeln (sh. Fig. 4).

Da die Schrägflächen anschließend in zum Mittelpunkt konzentrische Flächen übergehen und das Teil 13 solange verdreht wird, bis die Rollen 15 diese Flächen erreicht haben (Stellung Figur 2), bleibt die Verriegelung auch dann wirksam, wenn kein Moment mehr auf das Teil 13 einwirkt.

Eine derartige Antriebs- und Verriegelungseinrichtung kann z. B. in der Weltraumtechnik zum Ausfahren eines Antennenarmes im Weltraum dienen, wobei es darauf ankommt, daß der Arm in Betriebsstellung praktisch starr in dem Raumfahrzeug gehalten wird.

2

## Patentansprüche

1. Antriebs- und Verriegelungseinrichtung, enthaltend eine mit einem auf einem Stator (1) befestigten Antrieb (4) verbundene Antriebswelle (5), ein Getriebe (6 bis 9) und einen Rotor (2), der mittels der Antriebswelle (5) und des Getriebes (6 bis 9) zwischen zwei um einen vorgegebenen Winkel zueinander verdreht liegende Endstellungen gedreht werden kann, von denen wenigstens eine verriegelbar ist, dadurch gekennzeichnet, daß die wenigstens eine verriegelbare Endstellung durch einen starren Anschlag (1a, 1b) bestimmt ist, daß die Antriebswelle (5) konzentrisch zum Rotor (2) angeordnet ist, daß zwischen einem mit der Antriebswelle (5) verbundenen Antriebsrad (6) der Antriebswelle (5) und einem konzentrisch dazu liegenden Antrieb (9) des Rotors (2) eine eine Getriebeverbindung herstellende Zwischenantriebsanordnung (7, 8) eingeschaltet ist, daß ein Bauteil (13), mit dem die Zwischenantriebsanordnung (7, 8) verbunden ist, konzentrisch zum Rotor (2) angeordnet ist, daß dieses Bauteil (13) mit einem mit dem Stator (1) verbundenen weiteren Teil (14) durch wenigstens einen Verriegelungshebel (12) derart verbindbar ist und der Verriegelungshebel (12) derart angeordnet und ausgebildet ist, daß vor Erreichen der verriegelbaren Endstellung das Bauteil (13) durch das Teil (14) festgehalten wird, daß aber ab Erreichen der verriegelbaren Endstellung bei weiter auf das Bauteil (13) wirkendem Antriebsmoment und die dadurch nun erfolgende Verdrehung des Bauteils (13) in entgegengesetzter Richtung der Verriegelungshebel (12) zwischen den beiden Teilen (13 und 14) über eine Schrägfläche (16) ausgelenkt wird und daß dabei der ausgelenkte Verriegelungshebel (12) an dem Rotor (2) im Sinne einer Verriegelung in der wenigstens einen Endstellung angreift und daß diese Verriegelung durch die weitere Verdrehung des Bauteils (13) dadurch gesichert wird, daß der Verriegelungshebel (12) aus seiner Anlage an die Schrägfläche herausgeführt wird.

2. Antriebs- und Verriegelungseinrichtung nach Anspruch 1, dadurch gekennzeichnet, daß der Verriegelungseingriff zwischen dem Rotor (2) und dem Verriegelungshebel (12) durch Zähne (12a) oder dergleichen im Rotor (2) oder Verriegelungshebel (12) und entsprechende Lücken im Verriegelungshebel (12) oder Rotor (2) erfolgt, wobei diese derart ausgebildet sind, daß über die schrägflächen der Zähre und der Lücke ein Drehmoment in Richtung auf den Anschlag (1a, 1b) aufgebracht wird.

3. Antriebs- und Verriegelungseinrichtung nach Anspruch 1 oder 2, dadurch gekennzeichnet, daß das Getriebe als Getriebe mit einem flexiblen Antriebskranz ausgebildet ist, der durch ein innerhalb des Antriebskranzes umlaufendes, unrundes Antriebsrad partiell umlaufend ausgebogen wird.

4. Antriebs- und Verriegelungseinrichtung nach einem der Ansprüche 1 bis 3, dadurch gekennzeichnet, daß die Verriegelung zwischen den beiden Teilen (13, 14) in der Verdrehungsphase dadurch gesichert ist, daß der Hebel (12) durch die Ausbildung des Rotors (2) an einer Auslenkung gehindert ist und daß der Rotor (2) bei Erreichen der Endstellung durch seine Ausbildung die Auslenkung freigibt.

## Claims

1. A driving and locking system including a drive shaft (5) fastened to a stator (1) and connected with a drive (4), a gear assembly (6 to 9) and a rotor (2) which can be turned by means of the drive shaft (5) and the gear assembly (6 to 9) between two end positions which are rotated relative to one another about a predetermined angle, with at least one of the end positions being lockable, characterised in that the at least one lockable end position is determined by a rigid stop (1a, 1b); the drive shaft (5) is concentric with the rotor (2); an intermediate drive arrangement (7, 8) which connects the gears is disposed between the drive wheel (6) connected with the drive shaft (5) and the rotor drive (9) which is concentric therewith so as to establish a driving connection; a member (13) connected with the intermediate drive arrangement (7, 8) is disposed concentric with the rotor (2); said member (13) is connected by means of at least one locking lever (12) with a further member (14) connected with the stator (1) in such a manner, and said locking lever (12) is arranged and configured in such a manner, that, before the member (13) reaches the lockable end position, the member (13) is detained by the member (14); but, once the lockable end position is reached, with the driving moment continuing to act on the member (13) and with the thus occurring rotation of the member (13) in the opposite direction, the locking lever (12) between the two members (13 and 14) is deflected by way of a sloped surface (16) and the deflected locking lever (12) thus engages at the rotor (2) in the sense of locking it in the at least one end position; and this lock is secured by further rotation of the member (13) in such a manner that the locking lever (12) is brought out of its contact with the sloped surface.

2. A driving and locking system according to claim 1, characterised in that the locking engagement between the rotor (2) and the locking lever (12) is effected by means of teeth (12a) or the like within the rotor (2) or within the locking lever (12), and corresponding gaps in the locking lever (12) or rotor (2), with the teeth and gaps being configured in such a manner that a torque is exerted in the direction of the stop (1a, 1b) by way of the slopes of the teeth and the gap.

3. A driving and locking system according to claim 1 or 2, characterised in that the gear assembly is configured as a gear assembly that includes a flexible ring of gears which is in part circumferentially bent outwardly by an out-of-round drive gear that rotates within the ring of gears.

4. A driving and locking system according to one of claims 1 to 3, characterised in that the lock between the two members (13, 14) is secured during the turning phase in that the configuration of the rotor (2) prevents the lever (12) from being deflected, with such deflection being made possible by the configuration of the rotor when the end position is reached.

## Revendications

1. Dispositif d'entraînement et de blocage, comprenant un arbre d'entraînement (5) relié à un entraînement (4) fixé sur un stator (1), un mécanisme de transmission (6 à 9) et un rotor (2) susceptible d'être tourné au moyen de l'arbre d'entraînement (5) et du mécanisme de transmission (6 à 9) entre deux positions extrêmes mutuellement décalées d'un angle préfixé, dont l'une au moins est blocable, caractérisé en ce que la position ou chaque position extrême blocable est déterminée par une butée rigide (1a, 1b), que l'arbre d'entraînement (5) est disposé concentriquement au rotor (2), qu'un dispositif d'entraînement intermédiaire (7, 8), établissant une liaison de transmission, est interposé entre une roue d'attaque (6) de l'arbre d'entraînement (5), roue qui est reliée à cet arbre (5), et un entraînement (9) du rotor (2) disposé concentriquement à cette roue, qu'une pièce (13), à laquelle est relié le dispositif d'entraînement (7, 8), est disposée concentriquement au rotor (2), que cette pièce (13) peut être reliée par au moins un levier de blocage (12) à une autre pièce (14) reliée au stator (1) de telle manière et que le levier de blocage (12) est disposée et conformée de telle manière que la pièce (13) est retenue par la pièce (14) avant qu'elle n'atteigne la position extrême blocable, mais que, à partir du moment où la position extrême blocable est atteinte, lorsqu'un couple d'entraînement continue d'être exercé sur la pièce (13) et par suite de la rotation de la pièce (13) en sens contraire produite de ce fait, le levier de blocage (12) est écarté au moyen d'une rampe (16) entre les deux pièces (13 et 14), que le levier de blocage (12) écarté attaque le rotor (2) dans le sens d'un blocage dans la position extrême et que ce blocage est garanti, sous l'effet de la poursuite de la rotation de la pièce (13), du fait que le levier de blocage (12) est écarté de sa position d'application contre la rampe.

2. Dispositif d'entraînement et de blocage selon la revendication 1, caractérisé en ce que l'engagement mutuel pour le blocage entre le rotor (2) et le levier de blocage (12) s'effectue au moyen de dents (12a) ou analogues prévus sur ou dans le rotor (2) ou le levier de blocage (12) et au moyen de crans correspondants prévus sur ou dans le levier de blocage (12) ou le rotor (2), les dents et les crans étant conformés de manière que leurs flancs inclinés produisent un couple de rotation en direction de la butée (1a, 1b).

3. Dispositif d'entraînement et de blocage selon la revendication 1 ou 2, caractérisé en ce que le mécanisme de transmission est réalisé sous la forme d'un mécanisme comportant une couronne d'entraînement flexible qui est partiellement fléchie vers l'extérieur, circonférentiellement, par une roue d'attaque non-circulaire tournant à l'intérieur de la couronne d'entraînement.

4. Dispositif d'entraînement et de blocage selon une des revendications 1 à 3, caractérisé en ce que le blocage entre les deux pièces (13, 14) dans la phase de rotation est garanti du fait que le levier (12) est empêché d'être écarté par la conformation du rotor (2), et que le rotor (2) autorise l'écartement, par suite de sa conformation, lorsque la position extrême est atteinte.

Fig 2

Fig. 1

Fig.3

Fig.4